# EUROPÄISCHE PATENTSCHRIFT

(11) **EP 0 687 542 B1**
(45) Veröffentlichungstag und Bekanntmachung des Hinweises auf die Patenterteilung: **05.11.1997**
(21) Anmeldenummer: 95108218.9
(22) Anmeldetag: 30.05.1995
(51) Int. Cl.: B29C 45/18, B29C 45/00

(54) **Verfahren zum Spritzgiessen von Formteilen aus Kunststoff**
Method for injection moulding of bodies from plastics
Procédé pour le moulage par injection des pièces en matière plastique

(30) Priorität: 18.06.1994 DE 4421405
(43) Veröffentlichungstag der Anmeldung: 20.12.1995
(73) Patentinhaber: Battenfeld GmbH, D-58540 Meinerzhagen (DE)
(72) Erfinder: Eckardt, Helmut, Dipl.-Ing., D-58540 Meinerzhagen (DE); Plank, Hermann, Dipl.-Ing., D-63225 Langen (DE)
(74) Vertreter: Gosdin, Michael, Dr.

(56) Entgegenhaltungen:
- DE-A- 2 461 925
- DE-A- 4 340 990

## Beschreibung

Die Erfindung bezieht sich auf ein Verfahren zum Spritzgießen von Gegenständen aus Kunststoff, wobei der Kunststoff in einem Plastifizier- und Einspritzaggregat plastifiziert und die Kunststoffschmelze in die Kavität eines Spritzgießwerkzeugs eingespritzt wird.

Dieses bei der Verarbeitung von Kunststoffen übliche Verfahren kann auch eingesetzt werden, wenn Werkstücke produziert werden sollen, die neben dem Kernmaterial aus Kunststoff eine äußere Lackschicht aufweisen.

Derartige Gegenstände werden in allen Lebensbereichen benötigt. Konventionell wird nach dem Herstellungsprozeß des Kunststoffteils in klassischer Weise ein Lackierungsprozeß nachgeschaltet, der das Werkstuck mit der gewünschten Lackschicht versieht. Um wirtschaftlicher arbeiten zu können, sind Entwicklungen bekannt geworden, bei denen die Lackschicht bereits während des Spritzgießprozesses aufgebracht wird.

So ist zum Beispiel aus der EP-A 657 268 ein Verfahren zum Spritzgießen von mindestens aus zwei unterschiedlichen Schichten bestehenden Gegenständen bekannt, wobei mindestens eine Schicht aus einem Lack hergestellt wird und wobei ein flüssiger Lack zum Einsatz kommt; es wird also ein Herstellungsverfahren für einen aus zwei unterschiedlichen Schichten bestehenden Kunststoffgegenstand beschrieben, bei dem die äußere Schicht, nämlich der Lack, im flüssigen Zustand aufgebracht wird. Hierzu wird der Lack in Form von Granulat in eine Kunststoffplastifiziereinheit gegeben. Unter der Einwirkung der Knetbewegung einer Plastifizierschnecke und der Wärmeenergie aus Heizelementen, die um den Plastifizierschneckenzylinder angeordnet sind, wird das Lackgranulat plastifiziert und verflüssigt. Es gelangt über eine Einspritzdüse in die Kavität eines Spritzgießwerkzeugs zusammen mit plastifizierter Kunststoffschmelze. Durch eine entsprechend ausgebildete Düse wird dabei erreicht, daß der Lack die Kunststoffschmelze umhüllt und sich in dieser Form auch in der Kavität des Spritzgießwerkzeugs anordnet. Möglich ist es hier auch, daß zunächst eine oder mehrere Schichten aus Lack in die Kavität des Werkzeugs eingespritzt werden und dann der Kunststoff im flüssigen Zustand. Die Werkstücke erhalten so bereits im Spritzgießprozeß einen zwei- oder mehrschichtigen Aufbau, wobei die Lackschichten das Kunststoffmaterial vollständig umgeben.

Nachteilhaft ist es dabei, daß nur solche Lacke verarbeitet werden können, die sich wie Thermoplaste verhalten, d. h. die in Granulatform vorliegenden Lacke müssen sich während der Verarbeitung durch eine Schneckenplastifiziereinheit plastifizieren lassen. Eine weitere Voraussetzung ist, daß die plastifizierten, also verflüssigten, Lacke im Schneckenzylinder der Plastifiziereinheit unter der dort herrschenden hohen Temperatur nicht aushärten.

Ein anderes Verfahren für die Produktion von lackummantelten Kunststoffteilen ist in der DE-A-44 14 258 beschrieben. Dort wird eine Möglichkeit offenbart, wie Lacke, die sich nicht unbedingt wie Thermoplaste verflüssigen lassen, zur vollständigen Ummantelung eines Kunststoffspritzgießteils auf dieses aufgebracht werden. Gemäß diesem Verfahren wird zunächst flüssiger Lack durch eine Lack-Einspritzvorrichtung über eine Lack-Einspritzdüse in die Kavität des Werkzeugs eingebracht. Anschließend wird aufgeschmolzenes Kunststoffmaterial durch eine Spritzeinheit über eine Kunststoff-Einspritzdüse in die Kavität des Spritzgießwerkzeugs eingebracht. Dadurch wird sozusagen das Innere der Kavität ausgefüllt, nachdem bereits die Kavitätswände mit der Lackschicht versehen sind. Das fertige Teil weist mithin eine äußere Lackschicht auf, wodurch sich ein weiterer Lackierungsprozeß erübrigt. Zur Lackeinspritzung ins Werkzeug werden bei dieser Entwicklung insbesondere Kolbenspritzeinheiten oder Zahnradpumpen eingesetzt.

Grundlage für die Durchführung der beiden erläuterten Verfahren ist es, daß sowohl das Kunststoffmaterial als auch der Lack in separaten Teilprozessen aufbereitet und ins Werkzeug eingebracht werden. Der vorrichtungsmäßige Aufwand ist infolgedessen hoch und die Fertigung entsprechend teuer, trotz des eingesparten späteren Lackierungsvorgangs.

Der Erfindung liegt daher die **Aufgabe** zugrunde, ein Verfahren zu schaffen, mit dem lackierte Kunststoffteile in einem Spritzgießprozeß noch einfacher und kostengünstiger hergestellt werden können und bei dem der apparative Aufwand möglichst klein bleibt.

Diese Aufgabe wird in Verbindung mit dem Oberbegriff des Patentanspruchs 1 dadurch gelöst, daß der Kunststoff vor der Einspritzung in die Kavität mit Lack versetzt und vermischt wird und aus der Kunststoff-Lackmischung der Gegenstand gebildet wird. Hierunter ist zu verstehen, daß nicht mehr, wie beim bekannten Stand der Technik, eine Ummantelung des Kunststoffmaterial mit Lack angestrebt wird, sondern eine Vermischung des Lacks mit dem Kunststoff. Es hat sich nämlich übertaschenderweise herausgestellt, daß die üblicherweise für das Lackieren von Kunststoffteilen heute eingesetzten Lacke, die selber überwiegend Kunststoffeigenschaften haben, ihre Farb- und Oberflächenwirkung auch dann voll entfalten, wenn sie mit Kernmaterial eines Kunststoffgegenstandes quasi verdünnt werden.

Eine Möglichkeit der erfindungsgemäßen Ausgestaltung ist, daß die Mischung von Kunststoff und Lack vor der Plastifizierung erfolgt; der Lack kann dabei fest oder flüssig sein. Er kann dem Kunststoff dabei insbesondere vor dem Aufschmelzen zugegeben werden und wird mit dem Kunststoffgranulat vor der Zuführung in das Plastifizier- und Einspritzaggregat (1, 2) in dem gewünschten Dosierungsverhältnis vermischt. Aus obiger Überlegung heraus kann es angezeigt sein, als Lack ein Konzentrat zu verwenden, da dann die Farbwirkung des Kunststoffes am stärksten ist.

Eine andere Möglichkeit der Ausgestaltung ist, daß die Mischung von Kunststoff und Lack nach der Plastifizierung erfolgt, wobei primär ein fester Lack zum Einsatz kommt, der selber in einer Plastifiziereinheit verflüssigt wird. Dabei wird der Lack, sofern er in Granulatform, in Pulverform oder in ähnlicher Form vorliegt, in einer separaten Plastifiziereinheit (5, 6) plastifiziert und zwecks Vermischung mit dem Kunststoff diesem zugegeben. Die Zugabe des plastifizierten Lacks erfolgt dabei insbesondere im Bereich der Schnecke (2) des Plastifizier- und Einspritzaggregats (1, 2). Sie kann aber beispielsweise auch im Bereich der Einspritzdüse (7) oder im Bereich des Angusses (9) erfolgen. Schließlich ist es auch möglich, daß der plastifizierte Lack erst im Bereich des Werkzeugs (4) dem Kunststoffzugegeben wird.

Schließlich besteht eine weitere Möglichkeit der Ausgestaltung des erfindungsgemäßen Verfahrens darin, daß ausschließlich flüssiger Lack zum Einsatz kommt. Der flüssige Lack wird dann in den bereits plastifizierten Kunststoff mit einem Einspritzsystem (8) eingespritzt. Diese Einspritzung des Lacks in die Schmelze kann wieder im Bereich der Schnecke (2) des Plastifizier- und Einspritzaggregats (1, 2), im Bereich der Einspritzdüse (7), im Bereich des Angusses (9) oder erst im Bereich des Werkzeugs (4) erfolgen.

Der Vorteil des erfindungsgemäßen Verfahrens ist, daß eine einfache bauliche Ausführung möglich ist, mit der lackierte Kunststoffwerkstücke hergestellt werden können.

In der Zeichnung sind Ausführungsbeispiele der Erfindung dargestellt:
Fig. 1 zeigt schematisch den Aufbau einer Spritzgießmaschine für die Durchführung des Verfahrens.
Fig. 2 stellt einen modifizierten Aufbau dar, bei dem die Lackzugabe im Bereich der Plastifizierschnecke erfolgt.
Fig. 3 zeigt einen weiter modifizierten Aufbau, bei dem flüssiger Lack mit einer Lack-Einspritzvorrichtung eingebracht wird.

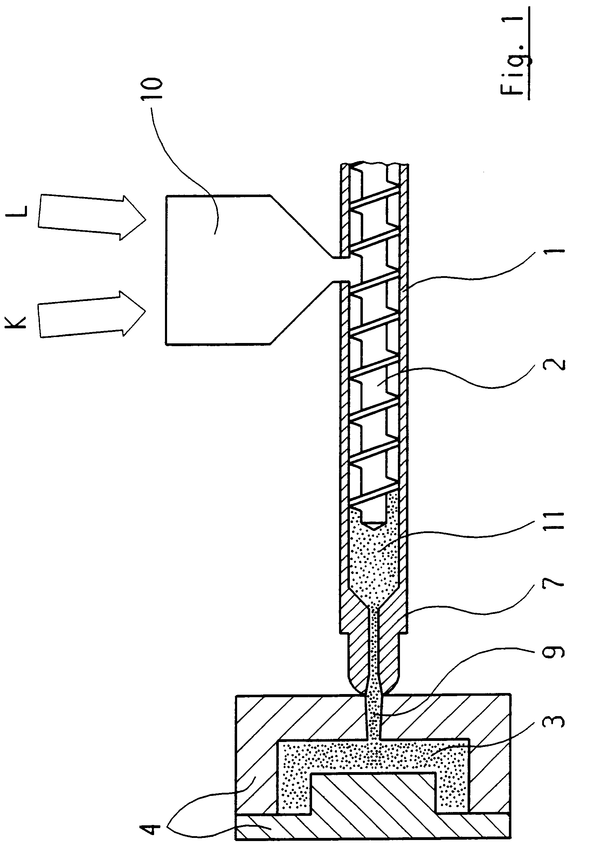

In Fig. 1 ist ein Plastifizier- und Einspritzaggregat 1, 2 zu sehen, das aus einem Schneckenzylinder 1 und einer in diesem rotierenden Schnecke 2 besteht. Durch den Einfülltrichter 10 wird Kunststoffgranulat dem Plastifizier- und Einspritzaggregat 1, 2 zugeführt, das durch die Rotationsbewegung der Schnecke 2 und ggf. durch - nicht dargestellte - Heizelemente plastifiziert wird. Im Schneckenvorraum 11 sammelt sich die plastifizierte Kunststoffschmelze. Sie wird durch eine axiale Verschiebung der Schnecke 2 über eine Einspritzdüse 7 und einen Angußbereich 9 in die Kavität 3 eines Spritzgießwerkzeugs 4 eingespritzt. Als Kunststoffmaterial, das nicht nur granulatförmig, sondern z. B. auch pulverförmig sein kann, können dabei verschiedene Arten zum Einsatz kommen, wie beispielsweise mit Treibmittel versetzte Kunststoffe, d. h. geschäumte Kunststoffe, verstärkte Kunststoffe (z. B. mit Glasfasern) oder gefüllte Kunststoffe (mineralische Kunststoffe oder mit Abschirmfasern versetzte).

Der Einfülltrichter 10 wird nun nicht nur mit Kunststoffgranulat gefüllt, sondern es wird gleichzeitig Lack zugemischt. Lack und Kunststoff können dabei auch ggf. vor dem Einfüllen in den Einfülltrichter in einer separaten Einrichtung vermischt werden. Der Lack kann hierbei in Granulatform oder in Pulverform vorliegen; denkbar ist auch, daß ein flüssiger Lack beigemischt wird. Grundsätzlich kann auch ein Mehrkomponenten-Lack ins Auge gefaßt werden, dessen Bestandteile mit dem Kunststoffgranulat kurz vor der Plastifizierung vermengt werden. Weiterhin kann der Lack auch wärmereagierend sein.

Die Mischung - bestehend aus Kunststoff und Lack - wird nun in an sich bekannter Weise aufbereitet und ins Werkzeug 4 eingespritzt. Die Farbpigmente im Lack sind durch den Plastifizierprozeß im Plastifizier- und Einspritzaggregat 1, 2 in der Kunststoffmasse gleichmäßig verteilt worden und haben die Masse im gewünschten Farbton gefärbt. Besonders vorteilhaft ist es dabei, ein Lackkonzentrat einzusetzen, da dann die Einfärbwirkung besonders intensiv ist.

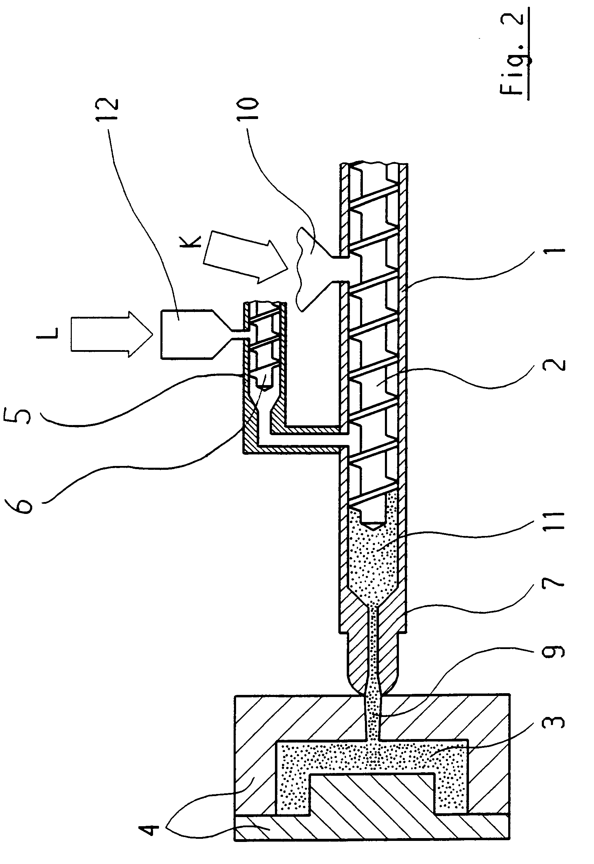

Eine andere Ausführungsform der Erfindung ist in Fig. 2 zu sehen. Die Aufbereitung des Lacks erfolgt hier in einer separaten Plastifiziereinheit 5, 6. In einem Schneckenzylinder 5 rotiert hier eine Schnecke 6. In dieser Plastifiziereinheit wird Lackgranulat oder -pulver, das mittels eines Einfülltrichters 12 in die Plastifiziereinheit 5, 6 gegeben wird, plastifiziert. Im gezeigten Fall wird der plastifizierte Lack im Bereich der Schnecke 2 des Plastifizier- und Einspritzaggregats 1, 2 dem plastifizierten Kunststoff zugegeben. Die Rotationsbewegung der Schnecke 2 vermischt Kunststoff und Lack, so daß das gut vermengte Gemisch schließlich ins Werkzeug 4 eingespritzt wird. Die Zugabe von Lack aus der Plastifiziereinheit 5, 6 kann natürlich auch an einer anderen Stelle als im Bereich der Schnecke 2 des Plastifizier- und Einspritzaggregats 1, 2 erfolgen, z. B. im Bereich der Einspritzdüse 7 oder des Angusses 9. In besonderen Fällen kann es sinnvoll sein, die beiden Schmelzen (Lack und Kunststoff) erst direkt im Werkzeug- ggf. mittels spezieller Misch-Düsen - zusammenzuführen.

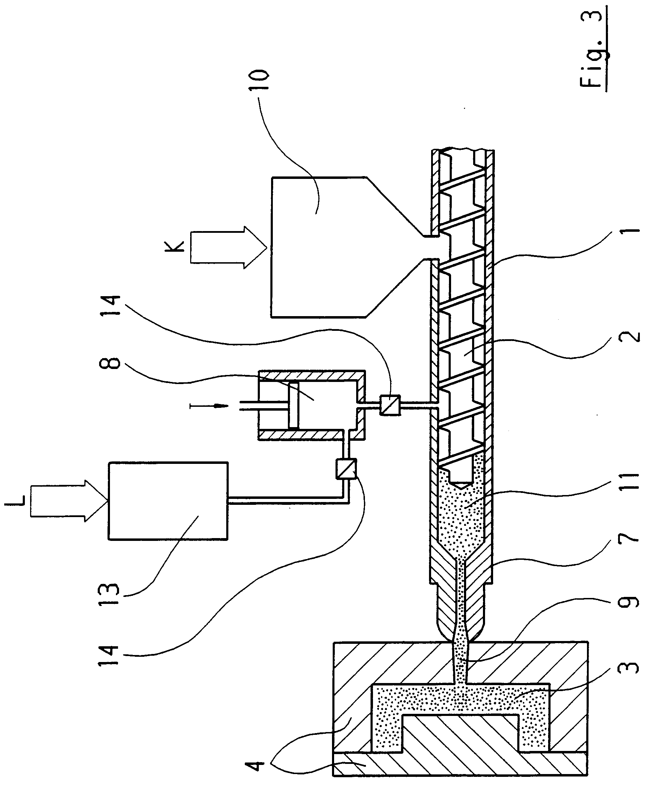

Eine weitere Modifikation des Verfahrens ist in Fig. 3 gezeigt. Hier kommt primär flüssiger Lack zum Einsatz. Der Lack befindet sich im vorliegenden Fall in einem Lackbehälter 13. Mittels eines Ventils 14 kann er durch die Bewegung des Kolbens des Lack-Einspritzsystems 8 (gegen die Pfeilrichtung) in dieses gelangen. Durch entsprechende Betätigung der Ventile 14 kann der Lack dann durch Bewegung des Kolbens des Einspritzsystems 8 (in Pfeilrichtung) in die Kunststoff-Schmelze eingespritzt werden. Dies kann wieder an verschiedenen Stellen erfolgen. In Fig. 3 ist der Fall gezeigt, daß die Lackzugabe im Bereich der Schnecke 2 des Plastifizier- und Einspritzaggregats 1, 2 erfolgt.

### Bezugszeichenliste:

- 1: Schneckenzylinder
- 2: Schnecke
- 1, 2: Plastifizier- und Einspritzaggregat
- 3: Kavität
- 4: Spritzgießwerkzeug
- 5: Schneckenzylinder der Lack-Plastifiziereinheit
- 6: Schnecke der Lack-Plastifiziereinheit
- 5, 6: Lack-Plastifiziereinheit
- 7: Einspritzdüse
- 8: Lack-Einspritzsystem
- 9: Anguß
- 10: Einfülltrichter
- 11: Schneckenvorraum
- 12: Lack-Einfülltrichter
- 13: Lackbehälter
- 14: Ventile
- K: Kunststoff
- L: Lack

## Patentansprüche

1. Verfahren zum Spritzgießen von Gegenständen aus Kunststoff,
wobei der Kunststoff in einem Plastifizier- und Einspritzaggregat (1, 2) plastifiziert und die Kunststoffschmelze in die Kavität (3) eines Spritzgießwerkzeugs (4) eingespritzt wird,
**dadurch gekennzeichnet,**
daß der Kunststoff vor der Einspritzung in die Kavität (3) mit Lack versetzt und vermischt wird und aus der Kunststoff-Lackmischung der Gegenstand gebildet wird und daß keine separate Lackummantelung durchgeführt wird.

2. Verfahren nach Anspruch 1, dadurch gekennzeichnet, daß der Lack dem Kunststoff vor dem Aufschmelzen zugegeben wird.

3. Verfahren nach Anspruch 2, dadurch gekennzeichnet, daß der Lack mit dem Kunststoffgranulat vor der Zuführung in das Plastifizier- und Einspritzaggregat (1, 2) in einem gewünschten Dosierungsverhältnis vermischt wird.

4. Verfahren nach mindestens einem der Ansprüche 1 bis 3, dadurch gekennzeichnet, daß der Lack ein Konzentrat ist.

5. Verfahren nach Anspruch 1, dadurch gekennzeichnet, daß der Lack, sofern er in Granulatform, in Pulverform oder in ähnlicher Form vorliegt, in einer separaten Plastifiziereinheit (5, 6) plastifiziert wird und zwecks Vermischung mit dem Kunststoff diesem zugegeben wird.

6. Verfahren nach Anspruch 5, dadurch gekennzeichnet, daß die Zugabe des plastifizierten Lacks im Bereich der Schnecke (2) des Plastifizier- und Einspritzaggregats (1, 2) erfolgt.

7. Verfahren nach Anspruch 5, dadurch gekennzeichnet, daß die Zugabe des plastifizierten Lacks im Bereich der Einspritzdüse (7) erfolgt.

8. Verfahren nach Anspruch 5, dadurch gekennzeichnet, daß die Zugabe des plastifizierten Lacks im Bereich des Angusses (9) erfolgt.

9. Verfahren nach Anspruch 5, dadurch gekennzeichnet, daß die Zugabe des plastifizierten Lacks im Bereich des Werkzeugs (4) erfolgt.

10. Verfahren nach Anspruch 1, dadurch gekennzeichnet, daß der Lack, sofern er in flüssiger Form vorliegt, in den bereits plastifizierten Kunststoff mit einem Einspritzsystem (8) eingespritzt wird.

11. Verfahren nach Anspruch 10, dadurch gekennzeichnet, daß die Einspritzung des Lacks in die Kunststoffschmelze im Bereich der Schnecke (2) des Plastifizier- und Einspritzaggregats (1, 2) erfolgt.

12. Verfahren nach Anspruch 10, dadurch gekennzeichnet, daß die Einspritzung des Lacks in die Kunststoffschmelze im Bereich der Einspritzdüse (7) erfolgt.

13. Verfahren nach Anspruch 10, dadurch gekennzeichnet, daß die Einspritzung des Lacks in die Kunststoffschmelze im Bereich des Angusses (9) erfolgt.

14. Verfahren nach Anspruch 10, dadurch gekennzeichnet, daß die Einspritzung des Lacks in die Kunststoffschmelze im Bereich des Werkzeugs (4) erfolgt.

## Claims

1. Process for injection moulding of objects made from plastic, wherein the plastic is plastified in a plastifying and injection unit (1, 2) and the plastic melt is injected into the cavity (3) of an injection moulding die (4), characterised in that the plastic is treated with lacquer before injection into the cavity (3) and mixed and the object is formed from the plastic-lacquer mixture, and in that separate lacquer coating is not carried out.

2. Process according to claim 1, characterised in that the lacquer is added to the plastic before melting.

3. Process according to claim 2, characterised in that the lacquer is mixed in a required metering ratio with the plastic granules before passing to the plastifying and injection unit (1, 2).

4. Process according to at least one of claims 1 to 3, characterised in that the lacquer is a concentrate.

5. Process according to claim 1, characterised in that the lacquer, provided it is present in the form of granules, in the form of powder or in similar form, is plastified in a separate plastifying unit (5, 6) and is added to the plastic for the purpose of mixing with the latter.

6. Process according to claim 5, characterised in that the addition of plastified lacquer takes place in the region of the screw (2) of the plastifying and injection unit (1, 2).

7. Process according to claim 5, characterised in that the addition of plastified lacquer takes place in the region of the injection nozzle (7).

8. Process according to claim 5, characterised in that the addition of plastified lacquer takes place in the region of the sprue (9).

9. Process according to claim 5, characterised in that the addition of plastified lacquer takes place in the region of the die (4).

10. Process according to claim 1, characterised in that the lacquer, provided it is present in liquid form, is injected into the already plastified plastic using an injection system (8).

11. Process according to claim 10, characterised in that the lacquer is injected into the plastic melt in the region of the screw (2) of the plastifying and injection unit (1, 2).

12. Process according to claim 10, characterised in that the lacquer is injected into the plastic melt in the region of the injection nozzle (7).

13. Process according to claim 10, characterised in that the lacquer is injected into the plastic melt in the region of the sprue (9).

14. Process according to claim 10, characterised in that the lacquer is injected into the plastic melt in the region of the die (4).

## Revendications

1. Procédé de moulage par injection d'objets en matière plastique, dans lequel la matière plastique est plastifiée dans un bloc de plastification et d'injection (1, 2) et la matière plastique fondue est injectée dans la cavité (3) d'un moule d'injection (4), caractérisé par le fait que la matière plastique, avant d'être injectée dans la cavité (3), est mélangée à du vernis et l'objet est formé avec le mélange matière plastique-vernis, et qu'il n'est pas effectué d'enrobage de vernis séparé.

2. Procédé selon la revendication 1, caractérisé par le fait que le vernis est ajouté à la matière plastique avant la fusion.

3. Procédé selon la revendication 2, caractérisé par le fait que le vernis est mélangé au granulé de matière plastique à une dose désirée avant l'introduction dans le bloc de plastification et d'injection (1, 2).

4. Procédé selon au moins une des revendications 1 à 3, caractérisé par le fait que le vernis est un concentré.

5. Procédé selon la revendication 1, caractérisé par le fait que le vernis, s'il est sous forme de granulé, sous forme de poudre ou sous une forme semblable, est plastifié dans un organe de plastification séparé (5, 6) et ajouté à la matière plastique pour y être mélangé.

6. Procédé selon la revendication 5, caractérisé par le fait que l'addition du vernis plastifié est effectuée dans la zone de la vis (2) du bloc de plastification et d'injection (1, 2).

7. Procédé selon la revendication 5, caractérisé par le fait que l'addition du vernis plastifié est effectuée dans la zone de la buse d'injection (7).

8. Procédé selon la revendication 5, caractérisé par le fait que l'addition du vernis plastifié est effectuée dans la zone de l'entrée (9).

9. Procédé selon la revendication 5, caractérisé par le fait que l'addition du vernis plastifié est effectuée dans la zone du moule (4).

10. Procédé selon la revendication 1, caractérisé par le fait que le vernis, s'il est sous forme liquide, est injecté avec un système d'injection (8) dans la matière plastique déjà plastifiée.

11. Procédé selon la revendication 10, caractérisé par le fait que l'injection du vernis dans la matière plastique fondue est effectuée dans la zone de la vis (2) du bloc de plastification et d'injection (1, 2).

12. Procédé selon la revendication 10, caractérisé par le fait que l'injection du vernis dans la matière plastique fondue est effectuée dans la zone de la buse d'injection (7).

13. Procédé selon la revendication 10, caractérisé par le fait que l'injection du vernis dans la matière plastique fondue est effectuée dans la zone de l'entrée (9).

14. Procédé selon la revendication 10, caractérisé par le fait que l'injection du vernis dans la matière plastique fondue est effectuée dans la zone du moule (4).
